# EUROPÄISCHE PATENTANMELDUNG

(11) **EP 4 403 900 A1**
(43) Veröffentlichungstag der Anmeldung: **24.07.2024**
(21) Anmeldenummer: 24152669.8
(22) Anmeldetag: 18.01.2024
(51) Int. Cl.: G01N 15/14, G01N 21/05, G01N 35/00

(54) **VERFAHREN UND MESSKANAL ZUR OPTISCHEN AUFZEICHNUNG VON MIKROPARTIKELN IN EINEM PARTIKELSTROM**

(30) Priorität: 20.01.2023 DE 102023101475
(71) Anmelder: Testo bioAnalytics GmbH, 79822 Titisee-Neustadt (DE)
(72) Erfinder: Münzer, Markus, 79856 Hinterzarten (DE)
(74) Vertreter: Mertzlufft-Paufler, Cornelius

(57) **Zusammenfassung**

Die Erfindung schlägt somit allgemein ein Verfahren in einem Messkanal (1) zur optischen Aufzeichnung von Mikropartikeln (2) in einem Partikelstrom (4) vor, wobei eine Aufzeichnungsfläche (5) transversal zur Durchströmungsrichtung (6) des Partikelstroms (4) ausgerichtet wird. Ein derartiges erfindungsgemäßes Verfahren bzw. ein erfindungsgemäßer Messkanal (1) sind insbesondere zur Aufzeichnung und Analyse von Mikropartikeln (2) in der Pharmazie und Lebensmittelindustrie von Interesse, jedoch nicht auf diese Industriezweige beschränkt (Figur 1).

## Beschreibung

Die Erfindung betrifft ein Verfahren zur optischen Aufzeichnung von Mikropartikeln in einem Partikelstrom.

Derartige Verfahren sind aus dem Stand der Technik bekannt und werden in aufwendigen, wartungsintensiven Analysegeräten unter Laborbedingungen durchgeführt. Die Probenvorbereitung findet häufig händisch statt und ist somit zeitaufwendig und eine Gefahrenquelle für den Operator. Bei gängigen Messverfahren werden Mikropartikel häufig in einem Hüllstrom vereinzelt durch einen Messkanal gepumpt und aufgezeichnet. Eine Vereinzelung der zu untersuchenden Mikropartikel ist zeitintensiv, sodass Messungen relativ lang andauern können. Parallelmessungen sind oftmals nicht möglich, sodass die Untersuchung mehrerer Umweltproben noch zeitintensiver wird. Dies ist insbesondere für diagnostische Untersuchungen im Bereich der Medizin oder Lebensmittelindustrie nachteilig.

Die Erfindung betrifft ferner einen Messkanal zur optischen Aufzeichnung von Mikropartikeln in einem Partikelstrom.

Die Erfindung betrifft ferner einen scheibenförmigen Probenträger, welcher insbesondere mit einer Mikrofluidik versehen ist.

Es ist daher Aufgabe der Erfindung, die Aufzeichnungen von Mikropartikeln in einem Partikelstrom zu verbessern.

Zur Lösung der genannten Aufgabe sind erfindungsgemäß die Merkmale des Anspruchs 1 vorgesehen. Insbesondere wird somit zur Lösung der genannten Aufgabe bei einem Verfahren der eingangs beschriebenen Art erfindungsgemäß vorgeschlagen, dass eine Aufzeichnungsfläche transversal zur Durchströmungsrichtung des Partikelstroms ausgerichtet wird. Hierdurch können vorteilhaft alle Mikropartikel direkt im Partikelstrom aufgezeichnet werden, da die Mikropartikel im Partikelstrom die transversal ausgerichtete Aufzeichnungsfläche durchlaufen. Dabei kann die Aufzeichnungsfläche vorzugsweise ausschließlich projiziert sein, sodass die zu untersuchenden Mikropartikel die Aufzeichnungsfläche ohne Wechselwirkungen einer physischen Aufzeichnungsfläche durchlaufen, wodurch Messergebnisse der erfindungsgemäßen Verfahrens besonders genau sein können. Somit kann eine Aufzeichnung von Mikropartikeln verbessert werden.

Besonders günstig ist es, wenn die Aufzeichnungsfläche senkrecht zum Partikelstrom ausgerichtet ist. Je steiler die Aufzeichnungsfläche ausgerichtet ist, desto geringer ist eine Wahrscheinlichkeit von falschen Doppelzählungen, wenn ein Mikropartikel die Aufzeichnungsfläche zweimal kreuzt.

Die Aufzeichnungsfläche kann bevorzugt senkrecht zur Durchströmungsrichtung des Partikelstroms ausgerichtet werden, wodurch eine besondere Schärfentiefe erreicht werden kann, wodurch ein erfindungsgemäßes Verfahren besonders genaue Messergebnisse produzieren kann.

Eine (nicht abschließende) Liste von zu untersuchenden Mikropartikeln kann beispielsweise umfassen: lebende oder organische Materie, insbesondere Mikroorganismen wie Bakterien, Pilze und Protozoen, und Viren sowie Teile davon, und tote oder anorganische Materie. Somit kann ein Verfahren besonders vielfältig eingesetzt und an Benutzerwünsche angepasst werden.

Ferner kann bei einem erfindungsgemäßen Verfahren ein optischer Detektor so an den Messkanal gefahren bzw. positioniert werden, dass sich der optische Detektor in einer hypothetischen Verlängerung des Messkanals und in Durchströmungsrichtung des Partikelstroms befindet. Somit kann Platz um den Messkanal, insbesondere um den Bereich der Aufzeichnung eingespart werden, was vorteilhaft ist.

Bei einer vorteilhaften Ausführungsform kann vorgesehen sein, dass der Partikelstrom die Aufzeichnungsfläche mit einem wesentlich größeren Durchmesser als einen mittleren Durchmesser der Mikropartikel durchströmt. Somit können mehrere Mikropartikel auf einmal in der Aufzeichnungsfläche aufgezeichnet werden, insbesondere wenn die Größenverteilung der Mikropartikel sehr heterogen ist. Da mehrere Mikropartikel pro Zeit aufgezeichnet werden können, kann ein Verfahren noch schneller ausgeführt werden.

Insbesondere kann dabei vorgesehen sein, dass der Partikelstrom die Aufzeichnungsfläche mit einem doppelt so großen Durchmesser als einen mittleren Durchmesser der Mikropartikel durchströmt. Somit können noch mehr Mikropartikel auf einmal in der Aufzeichnungsfläche aufgezeichnet werden, auch wenn die Größenverteilung der Mikropartikel relativ homogen ist, was vorteilhaft ist.

Ganz besonders kann dabei vorgesehen sein, dass der Partikelstrom die Aufzeichnungsfläche mit einem fünfmal so großen Durchmesser als einen mittleren Durchmesser der Mikropartikel durchströmt. Somit können besonders viele Mikropartikel auf einmal in der Aufzeichnungsfläche aufgezeichnet werden, wodurch ein Verfahren besonders schnell ausführbar ist. Auch können mehrere vorzugsweise schmale, aber längliche Mikropartikel die Aufzeichnungsfläche gleichzeitig durchströmen, unabhängig von ihrer relativen Ausrichtung im Partikelstrom. Ferner kann ein Verfahren auch sicherer durchgeführt werden, da der Messkanal unter einem geringeren Druck steht. Dies kann insbesondere bei Messungen mit organischen Mikropartikeln wie Mikroorganismen von Vorteil sein.

Bei einer vorteilhaften Ausführungsform kann vorgesehen sein, dass die Aufzeichnungsfläche als Aufzeichnungsebene ausgerichtet wird. Somit kann bei der Aufzeichnung eine besonders hohe Schärfentiefe über die gesamte Aufzeichnungsfläche hinweg erreicht werden, wodurch eine sehr hohe Messgenauigkeit erreicht werden kann.

Bei einer vorteilhaften Ausführungsform kann vorgesehen sein, dass die Mikropartikel in dem Partikelstrom verdünnt werden, wobei ein mittlerer Abstand der Mikropartikel vorzugsweise größer als der mittlere Durchmesser der Mikropartikel ist. Hierdurch können Mikropartikel vereinzelt werden, wodurch eine höhere Auflösung einer Aufzeichnung erhalten werden kann, da mehrere Mikropartikel die Aufzeichnungsebene auf einmal passieren können. Dadurch, dass eine Verklumpung durch eine Verdünnung zumindest vermindert werden kann, kann ebenso eine Druckbelastung auf den Messkanal vermindert werden, insbesondere dann, wenn wie zuvor beschrieben, der Partikelstrom die Aufzeichnungsfläche mit einem bis zu fünfmal so großem Durchmesser als einen mittleren Durchmesser der Mikropartikel durchströmt.

Insbesondere kann ein Partikelstrom so verdünnt werden, dass ein mittlerer Abstand der Mikropartikel insbesondere doppelt oder fünfmal so groß als der mittlere Durchmesser der Mikropartikel ist. Durch noch größere Verdünnungen kann ein besonders sicheres Verfahren mit einer sehr hohen Sensitivität erreicht werden.

Bei einer vorteilhaften Ausführungsform kann vorgesehen sein, dass der Partikelstrom zwischen einem Detektor und der Aufzeichnungsfläche umgelenkt wird. Hierdurch kann ein Partikelstrom vorteilhaft so umgelenkt werden, dass eine Entfernung zwischen Detektor und der transversal im Partikelstrom ausgerichteten Aufzeichnungsfläche kurz sein kann. Somit kann ein Detektor vorteilhaft für eine optimale Bildschärfe relativ zur Aufzeichnungsfläche bewegt werden, wodurch eine Aufzeichnung und nachfolgende Auszählung der Mikropartikel verbessert werden kann.

Bei einer vorteilhaften Ausführungsform kann vorgesehen sein, dass zur Aufzeichnung der Mikropartikel ein Bild aufgenommen wird. Somit können Mikropartikel auch nachfolgend analysiert werden. So kann eine Analyse eine Identitätsbestimmung, Vermessung oder weitere dem Fachmann bekannte Analysemethoden umfassen, was vorteilhaft zur Charakterisierung von Mikropartikeln in Umweltproben ist.

Vorzugsweise wird eine kontinuierliche Bildaufnahme durchgeführt. Eine kontinuierliche Bildaufnahme kann eine noch aufschlussreichere Charakterisierung von Mikropartikeln in Umweltproben ermöglichen, da die Mikropartikel in ihrem gesamten Volumen bzw. ihre gesamte Oberfläche aufgenommen werden können. Ferner kann verhindert werden, dass Mikropartikel die Aufnahmefläche durchlaufen, ohne detektiert zu werden, wodurch eine Aufzeichnung von Mikropartikeln noch genauer sein kann.

Alternativ oder zusätzlich kann vorgesehen sein, dass die Bildaufnahme ausgezählt wird. Dabei wird die Auszählung der Bildaufnahme vorzugsweise automatisiert durchgeführt. Somit kann eine Anzahl von Mikropartikeln in einer Umweltprobe ermittelt werden, was insbesondere für diagnostische Studien von Vorteil sein kann.

Bei einer vorteilhaften Ausführungsform kann vorgesehen sein, dass eine Aufzeichnung wenigstens eine Fluoreszenzaufnahme umfasst. Somit kann eine Umweltprobe vorteilhaft nach fluoreszierenden Mikropartikeln gescreent werden. Dies ist insbesondere dann vorteilhaft, wenn die Umweltprobe vor der Aufzeichnung mit Fluoreszenzsmarkern vorbehandelt wurde, um spezifische Mikropartikel zu detektieren. Somit kann vorteilhaft zwischen fluoreszierenden und nicht fluoreszierenden Mikropartikeln in einer Umweltprobe unterschieden werden, wodurch eine genaue Bestimmung, insbesondere nach einer wie zuvor genannten Auszählung einer Bildaufnahme, möglich ist.

Bei einer vorteilhaften Ausführungsform kann vorgesehen sein, dass eine Aufzeichnung eine Intensitätsänderung an der Aufzeichnungsfläche erfasst. Hierdurch kann vorteilhaft eine Änderung der Intensität eines detektierbaren Signals erfasst werden, wodurch eine Aufzeichnung an Mikropartikeln noch umfassender analysiert werden kann. Somit kann beispielsweise die mittlere Durchtrittszeit von Mikropartikeln durch die Aufzeichnungsfläche ermittelt werden, wodurch eine Aufzeichnung im Verlauf beispielsweise durch Anpassung einer Bildwiederholungsrate an die mittlere Durchtrittszeit optimiert werden kann.

Bei einer vorteilhaften Ausführungsform kann vorgesehen sein, dass eine Bildwiederholungsrate größer ist als die Durchtrittszeit eines Mikropartikels. Somit kann verhindert werden, dass Mikropartikel unbemerkt die Aufzeichnungsfläche passieren, was für eine korrekte Quantifizierung der Mikropartikel wichtig ist. Dabei kann die Bildwiederholungsrate vorzugsweise an die mittlere Größe der Mikropartikel und/oder die Beschaffenheit der Mikropartikel angepasst sein, um eine Aufzeichnung vorteilhaft auszugestalten.

Bei einer vorteilhaften Ausführungsform kann vorgesehen sein, dass die Bildwiederholungsrate so eingerichtet ist, dass von jedem Mikropartikel mehrere Aufnahmen beim Durchtritt durch die Aufzeichnungsfläche aufgenommen werden. Hierdurch kann der Eintritt bzw. der Austritt der Mikropartikel separat voneinander aufgezeichnet werden. Bei einer sehr hohen Bildwiederholungsrate kann somit der Durchtritt eines Mikropartikels verfolgt werden, sodass beispielsweise verklumpte und/oder eng liegende Mikropartikel voneinander separiert ausgezählt werden können. Somit kann eine Auswertung der Mikropartikel noch präziser werden.

Bei einer vorteilhaften Ausführungsform kann vorgesehen sein, dass eine Bildabgleichung durchgeführt wird. Somit können Bilder abgeglichen werden, wodurch Falschzählungen der Mikropartikel korrigiert bzw. vermieden werden können.

Bei einer vorteilhaften Ausführungsform kann vorgesehen sein, dass eine akustische Beaufschlagung während der Aufzeichnung vorgenommen wird. So kann vorzugsweise eine Membran infolge einer Beaufschlagung einen Schall erzeugen, der an eine Lichtquelle weitergegeben wird. Somit kann eine gleichmäße Ausleuchtung der Aufzeichnungsfläche ermöglicht werden, sodass eine Aufzeichnung von Mikropartikeln noch genauer durchgeführt werden kann.

Bei einer vorteilhaften Ausführungsform kann vorgesehen sein, dass das Verfahren in einem fluidischen Kanalsystem durchgeführt wird. Hierdurch kann ein Verfahren mit einem geringen Volumen durchgeführt werden, was kostengünstig und somit vorteilhaft ist.

Dabei kann insbesondere vorgesehen sein, dass das fluidische Kanalsystem als Teil einer Mikrofluidik ausgebildet ist. Hierdurch kann eine Mikroumgebung der Mikrofluidik steuerbar ausgestaltet sein, wodurch vielfältige Verarbeitung- und/oder Detektionsprozesse des Verfahrens schnell und kostengünstig durchgeführt werden können.

Alternativ oder zusätzlich sind zur Lösung der genannten Aufgabe erfindungsgemäß die Merkmale des nebengeordneten, auf einen Messkanal gerichteten Anspruchs vorgesehen. Insbesondere wird somit zur Lösung der genannten Aufgabe bei einem Messkanal der eingangs beschriebenen Art erfindungsgemäß vorgeschlagen, dass die Aufzeichnungsfläche transversal zu einer Längsausdehnung des Messkanals ausgerichtet ist. Dabei ist die Aufzeichnungsfläche so in dem Messkanal ausgerichtet, dass jeder Mikropartikel im Partikelstrom wenigstens einmal aufgezeichnet werden kann, wodurch Aufzeichnungen von Mikropartikeln besonders akkurat ausführbar sein können. Ein erfindungsgemäßer Messkanal kann vorteilhaft zur Durchführung eines wie zuvor beschriebenen oder nachfolgend beanspruchten Verfahrens benutzt werden. Somit werden Aufzeichnungen von Mikropartikeln verbessert.

Bevorzugt kann eine Aufzeichnungsfläche senkrecht zum Messkanal ausgerichtet sein. Somit kann eine Aufzeichnungsfläche besonders klein ausgebildet sein, was vorteilhaft eine höhere Vergrößerung durch den Detektor ermöglicht.

Ferner können die optischen Eigenschaften des Messkanals so ausgebildet sein, dass der Messkanal eine Aufzeichnung wenig bis gar nicht beeinflusst. So kann eine Farbgebung des Messkanals, insbesondere im Bereich der Aufzeichnungsfläche, optimal an die Beleuchtung bzw. Aufzeichnung der Mikropartikel angepasst sein. So kann vorteilhaft die Sensitivität einer Aufzeichnung verbessert werden.

Bei einer vorteilhaften Ausführungsform eines Messkanals kann vorgesehen sein, dass der Messkanal zwischen Detektor und Aufzeichnungsfläche einen Richtungswechsel aufweist. Somit kann ein Messkanal relativ klein und kostengünstig ausgebildet sein, was von Vorteil ist. Besonders vorteilhaft kann sein, dass bei einem derartigen Messkanal ein Detektor sehr nah an den Messkanal bzw. die Aufzeichnungsfläche positioniert sein kann. Hierdurch kann vorteilhaft viel Licht eingefangen werden, wodurch Aufzeichnungen von Mikropartikeln noch weiter verbessert werden können.

Dabei ist die Aufzeichnungsfläche vorzugsweise in dem Messkanal so ausgerichtet, dass mögliche Verwirbelungen kaum oder überhaupt nicht durch die Aufzeichnungsfläche strömen können. Somit kann vorteilhaft verhindert werden, dass Mikropartikel mehrmals die Aufzeichnungsebene durchlaufen und somit doppelt oder mehrfach gezählt werden. Ferner kann somit die maximal nutzbare Vergrößerung noch größer realisiert werden.

Bei einer vorteilhaften Ausführungsform eines Messkanals kann vorgesehen sein, dass Mittel zur Fluoreszenzmessung ausgebildet sind. Bei den Mitteln zur Fluoreszenzmessung handelt es sich um für den Fachmann bekannte Mittel. Somit können vorteilhaft fluoreszierende Mikropartikel aufgezeichnet werden, wodurch spezifische Mikropartikel einer Umweltprobe identifiziert bzw. ausgezählt werden können.

Bei einer vorteilhaften Ausführungsform eines Messkanals kann vorgesehen sein, dass ein Durchmesser, vorzugsweise ein Durchmesser im Bereich der Aufzeichnungsfläche des Messkanals, größer als der mittlere Durchmesser zweier Mikropartikel, insbesondere doppelt oder fünfmal so groß, ist. Durch einen derartigen Messkanal können mehrere Mikropartikel gleichzeitig die Aufzeichnungsebene passieren bzw. kann verhindert werden, dass der Messkanal verstopft wird. Bei Durchmessern von Messkanälen, die doppelt oder fünfmal so groß sind wie der mittlere Durchmesser von den zu untersuchenden Mikropartikeln, können die vorgenannten Vorteile besonders effektiv realisiert sein.

Bei einer vorteilhaften Ausführungsform eines Messkanals kann vorgesehen sein, dass zwischen Aufzeichnungsfläche und Detektor ein vorzugsweise transparentes Abdichtmedium ausgebildet ist. Bei einem zwischen Aufzeichnungsfläche und Detektor positionierten, transparenten Abdichtmedium kann ein Messkanal, insbesondere dessen optische Eigenschaften, flexibel ausgebildet sein. Dies ist insbesondere dann möglich, wenn die Aufzeichnungsfläche zwischen zwei vorzugsweise transparenten Abdichtmedien positioniert ist. In letztgenanntem Beispiel kann der oder ein Detektor auch an unterschiedlichen Positionen relativ zum Messkanal positioniert sein.

Bei einer vorteilhaften Ausführungsform eines Messkanals kann vorgesehen sein, dass der Messkanal einen Zulauf und einen Ablauf hat, wobei der Zulauf und der Ablauf vorzugsweise parallel zueinander ausgebildet sind. Hierdurch kann ein Partikelstrom platzsparend zur Aufzeichnungsfläche geführt und zur Entsorgung abgeführt werden, was insbesondere vorteilhaft bei Messkanälen einer Mikrofluidik sein kann.

Bei einer vorteilhaften Ausführungsform eines Messkanals kann vorgesehen sein, dass die Aufzeichnungsfläche als Aufzeichnungsebene ausbildbar ist. Somit kann eine Aufzeichnung mit einer besonders hohen Schärfentiefe realisiert werden, was vorteilhaft ist.

Alternativ oder zusätzlich kann vorgesehen sein, dass die Aufzeichnungsfläche an wenigstens zwei Positionen des Messkanals ausbildbar ist. Somit kann eine Entfernung zwischen Detektor und Aufzeichnungsfläche variiert werden, um optimale Aufzeichnungserbnisse zu erzielen.

Bei einer vorteilhaften Ausführungsform eines Messkanals kann vorgesehen sein, dass der Messkanal Teil einer Mikrofluidik ist. Somit können kleine Probenvolumina einer Umweltprobe analysiert werden.

Vorzugsweise kann sich die Mikrofluidik auf einem scheibenförmigen Probenträger befinden. Somit kann ein kleines Volumen zur Aufzeichnung von Mikropartikeln in einem Verfahren, insbesondere wie zuvor beschrieben oder nachfolgend beansprucht, schnell und automatisiert durchgeführt werden. Ferner kann ein scheibenförmiger Probenträger zur Zentrifugation ausgebildet sein. Hierdurch kann eine Aufzeichnung von Mikropartikeln besonders vorteilhaft durch zentrifugale Mikrofluidik automatisiert werden, was sehr vorteilhaft ist.

Alternativ oder zusätzlich sind zur Lösung der genannten Aufgabe erfindungsgemäß die Merkmale des nebengeordneten, auf einen scheibenförmigen Probenträger gerichteten Anspruchs vorgesehen. Insbesondere wird somit zur Lösung der genannten Aufgabe bei scheibenförmigen Probenträgern der eingangs beschriebenen Art erfindungsgemäß vorgeschlagen, dass bei dem scheibenförmigen Probenträger Mittel zur Ausführung eines wie zuvor beschriebenen oder nachfolgend beanspruchten Verfahrens und/oder eines wie zuvor beschriebenen und/oder nachfolgend beanspruchten Messkanals ausgebildet sind. Ein scheibenförmiger Probenträger kann vorzugsweise zur Verwendung in einer Zentrifuge ausgebildet sein. Somit kann ein Verfahren und/oder ein Messkanal zur Aufzeichnung von Mikropartikeln vollautomatisiert durch zentrifugale Mikrofluidik ausgeführt bzw. verwendet werden, was kostensparend und schnell sein kann. Dies kann auch außerhalb von arbeitsintensiven Analyselabors stattfinden, was von Vorteil ist.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: eine Seitenansicht einer Mikrofluidik, die einen erfindungsgemäßen Messkanal zur Durchführung eines erfindungsgemäßen Verfahrens umfasst,
- Fig. 2: eine Aufsicht eines scheibenförmigen Probenträgers mit einer in der Figur 1 gezeigten Mikrofluidik.

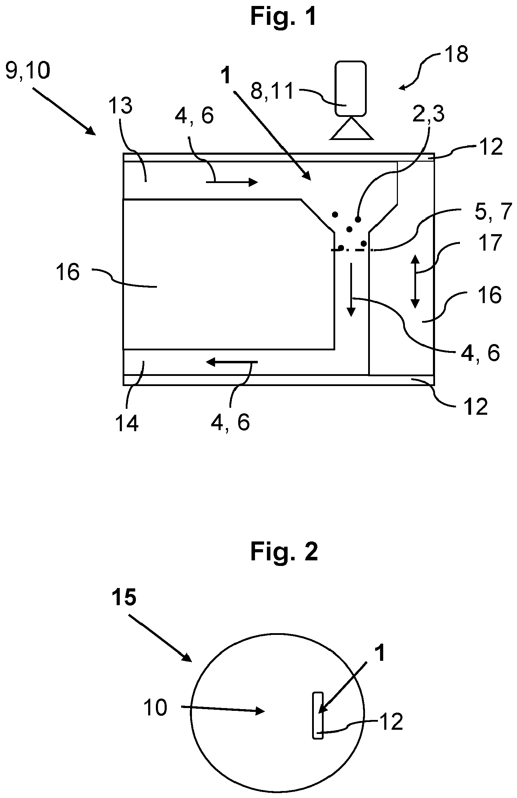

Figur 1 zeigt eine Seitenansicht einer Mikrofluidik 10, die einen erfindungsgemäßen Messkanal 1 zur Durchführung eines erfindungsgemäßen Verfahrens umfasst. Erfindungsgemäß kann der Messkanal 1 auch in einem fluidischen Kanalsystem 9 ausgebildet sein, das nicht als Teil einer Mikrofluidik 10 ausgebildet ist.

Im Folgenden wird ein mögliches erfindungsgemäßes Verfahren sowie die dargestellten Vorrichtungsmerkmale anhand der Figur 1 näher erläutert.

Ein Partikelstrom 4 fließt durch einen Zulauf 13 des Messkanals 1 und vollzieht auf Höhe eines Detektors 8 einen Richtungswechsel, wodurch der Partikelstrom 4 nach unten fließt. Im Bereich des Richtungswechsels können Verwirbelungen bzw. Turbulenzen entstehen. Um bei einer Aufzeichnung der Mikropartikel 1 Mehrfachzählungen aufgrund der Verwirbelungen bzw. Turbulenzen zu vermeiden, wird bzw. ist die Aufzeichnungsfläche 5 unterhalb des Richtungswechsels projiziert.

Die Aufzeichnungsfläche 5 ist in der Ausführungsform der Figur 1 als Aufzeichnungsebene 7 transversal zur Durchströmungsrichtung 6 des Partikelstroms 4 und zur Wandung 16 der Mikrofluidik 10 projiziert. Somit kann eine besonders gute Schärfentiefe erreicht werden.

Es kann vorgesehen sein, dass die Aufzeichnungsebene 7 innerhalb eines Ausrichtungsbereichs 17 des Messkanals 1, also an verschieden Positionen, transversal ausgerichtet wird. Somit kann eine Aufzeichnung optimal an die Beschaffenheit des Partikelstroms 4 angepasst werden.

Die im Partikelstrom 4 befindlichen Mikropartikel 2 sind Mikroorganismen 3, welche aufgezeichnet und identifiziert werden sollen. Zur besseren Übersicht sind die im Partikelstrom 4 vorzugsweise gleichmäßig verteilten Mikropartikel 2, 3 nur im Bereich der Aufzeichnungsfläche 5, 7 dargestellt. Die Mikropartikel 2, 3 können durch wenigstens einen Verarbeitungsschritt, vorzugsweise durch eine Fixierung und/oder Konditionierung und/oder Färbung der Mikropartikel 2, 3 und/oder eine Hintergrundreduktion und/oder eine thermische und/oder optische Anregung und/oder Verdünnung vorbehandelt worden sein, um eine Aufzeichnung optimal zu ermöglichen.

Beim Durchtritt der Mikropartikel 2, 3 durch die Aufzeichnungsebene 7 wird durch die erfindungsgemäße, transversale Ausrichtung der Aufzeichnungsebene 7 vorteilhaft jeder Mikropartikel 2, 3 erfasst und ausgezählt. Dabei kann der Detektor 8 so ausgebildet sein, dass eine Intensitätsänderung an der Aufzeichnungsebene 7 und/oder ein Bild aufgezeichnet wird. Der Detektor 8 kann auch eine kontinuierliche Bildaufnahme durchführen.

Generell können mehrere Detektoren ausgebildet sein, um eine Vielzahl an Informationen des Partikelstroms 4 aufzeichnen zu können. Beispielsweise kann ein oder der Detektor 8 Mittel 11 zur Fluoreszenzaufnahme haben, wie es in der in Figur 1 dargestellten Ausführungsform der Fall ist. Die in Figur 1 gezeigten Mikropartikel 2, 3 sind nämlich wie zuvor beschrieben vorbehandelt, sodass bei der Aufzeichnung vorzugsweise fluoreszierende Mikroorganismen 3 gemessen werden.

Es ist in Figur 1 zu erkennen, dass mehrere Mikropartikel 2, 3 gleichzeitig die Aufzeichnungsebene 7 durchströmen können, da der Durchmesser des Messkanals 1 im Bereich der Aufzeichnungsebene 7 größer als der mittlere Durchmesser der Mikropartikel 2, 3 ist. Somit können besonders schnelle Messungen durchgeführt werden.

In der in Figur 1 gezeigten Ausführungsform ist die Bildwiederholungsrate größer als die Durchtrittszeit eines Mikropartikels 2, 3. Ferner werden von jedem Mikropartikel 2, 3 mehrere Aufnahmen beim Durchtritt durch die Aufzeichnungsebene 7 aufgenommen. Somit sind Mikropartikel 2, 3 besonders gut detektierbar.

Bei der in Figur 1 gezeigten Ausführungsform werden die Aufzeichnungen von Mikropartikeln 2, 3 besonders genau durchgeführt, da eine akustische Beaufschlagung während der Aufzeichnung vorgenommen wird. So wird der durch eine Beaufschlagung erzeugte Schall an eine Lichtquelle 18 weitergegeben, wodurch eine gleichmäße Ausleuchtung der Aufzeichnungsebene 7 ermöglicht wird.

Die Beschaffenheit der Mikrofluidik 10 ist optimal für die Aufzeichnung an den Detektor 8 angepasst. So sind die Abdichtmedien 12 der Mikrofluidik 10, zwischen welche die Aufzeichnungsebene 7 projiziert wird, transparent ausgebildet. Ebenfalls kann eine optische Beschaffenheit einer Wandung 16 an die Detektionsmöglichkeiten eines Verfahrens zur Aufzeichnung von Mikropartikeln 2, 3 angepasst sein.

Ferner kann ein oder der Detektor 8 sehr nah zu dem Messkanal 1 herangeführt werden, da der Messkanal 1 zwischen Aufzeichnungsebene 7 und Detektor 8 einen Richtungswechsel aufweist.

Nachdem die Mikropartikel 2, 3 die Aufzeichnungsebene 7 durchschritten haben, fließt der Partikelstrom 4 über einen Ablauf 14 ab und kann gegebenenfalls entsorgt oder nachfolgend bearbeitet werden. Zur vorteilhaften Platzeinsparung, insbesondere bei einer Mikrofluidik 10, sind Zulauf 13 und Ablauf 14 parallel zueinander ausgerichtet.

Das zuvor beschrieben Verfahren kann in einem scheibenförmigen Probenträger 15, wie er in Figur 2 dargestellt ist, durchgeführt werden, da der scheibenförmige Probenträger 15 Mittel zur Ausführung des Verfahrens ausgebildet hat. So weist der scheibenförmige Probenträger 15 beispielsweise eine Mikrofluidik 10 mit einem Messkanal 1 nach Figur 1 auf. Durch die Aufsicht der Figur 2 auf den scheibenförmigen Probenträger 15 ist das obere Abdichtmedium 12 des Messkanals 1 zu sehen. Der scheibenförmige Probenträger 15 der Figur 2 ist zur Zentrifugation geeignet, wodurch eine Aufzeichnung von Mikropartikeln 2, 3 besonders vorteilhaft durch zentrifugale Mikrofluidik automatisiert ausführbar sein kann.

Die Erfindung schlägt somit allgemein ein Verfahren in einem Messkanal 1 zur optischen Aufzeichnung von Mikropartikeln 2 in einem Partikelstrom 4 vor, wobei eine Aufzeichnungsfläche 5 transversal zur Durchströmungsrichtung 6 des Partikelstroms 4 ausgerichtet wird. Ein derartiges erfindungsgemäßes Verfahren bzw. ein erfindungsgemäßer Messkanal 1 sind insbesondere zur Aufzeichnung und Analyse von Mikropartikeln 2 in der Pharmazie und Lebensmittelindustrie von Interesse, jedoch nicht auf diese Industriezweige beschränkt.

### Bezugszeichenliste

- 1: Messkanal
- 2: Mikropartikel
- 3: Mikroorganismen
- 4: Partikelstrom
- 5: Aufzeichnungsfläche
- 6: Durchströmungsrichtung
- 7: Aufzeichnungsebene
- 8: Detektor
- 9: fluidisches Kanalsystem
- 10: Mikrofluidik
- 11: Mittel zur Fluoreszenzmessung
- 12: Abdichtmedium
- 13: Zulauf
- 14: Ablauf
- 15: scheibenförmiger Probenträger
- 16: Wandung von 1, 9, 10
- 17: Ausrichtungsbereich von 5, 7
- 18: Lichtquelle

## Patentansprüche

1. Verfahren zur optischen Aufzeichnung von Mikropartikeln (2) in einem Partikelstrom (4), **dadurch gekennzeichnet, dass** eine Aufzeichnungsfläche (5) transversal, insbesondere senkrecht, zur Durchströmungsrichtung (6) des Partikelstroms (4) ausgerichtet wird.

2. Verfahren nach Anspruch 1, **dadurch gekennzeichnet, dass** der Partikelstrom (4) die Aufzeichnungsfläche (5) mit einem wesentlich größeren, insbesondere mit einem doppelt so großen, ganz besonders einem fünfmal so großen, Durchmesser als einen mittleren Durchmesser der Mikropartikel (2) durchströmt.

3. Verfahren nach einem der vorhergehenden Ansprüche, **dadurch gekennzeichnet, dass** die Aufzeichnungsfläche (5) als Aufzeichnungsebene (7) ausgerichtet wird.

4. Verfahren nach einem der vorhergehenden Ansprüche, **dadurch gekennzeichnet, dass** die Mikropartikel (2) in dem Partikelstrom (4) verdünnt werden, wobei ein mittlerer Abstand der Mikropartikel (2) vorzugsweise größer als der mittlere Durchmesser der Mikropartikel (2), insbesondere doppelt oder fünfmal so groß, ist.

5. Verfahren nach einem der vorhergehenden Ansprüche, **dadurch gekennzeichnet, dass** der Partikelstrom (4) zwischen einem Detektor (8) und der Aufzeichnungsfläche (5) umgelenkt wird.

6. Verfahren nach einem der vorhergehenden Ansprüche, **dadurch gekennzeichnet, dass** zur Aufzeichnung der Mikropartikel (2) ein Bild aufgenommen wird, wobei vorzugsweise eine kontinuierliche Bildaufnahme durchgeführt wird, und/oder dass die Bildaufnahme ausgezählt wird.

7. Verfahren nach einem der vorhergehenden Ansprüche, **dadurch gekennzeichnet, dass** eine Aufzeichnung wenigstens eine Fluoreszenzaufnahme umfasst.

8. Verfahren nach einem der vorhergehenden Ansprüche, **dadurch gekennzeichnet, dass** eine Aufzeichnung eine Intensitätsänderung an der Aufzeichnungsfläche (5) erfasst.

9. Verfahren nach einem der vorhergehenden Ansprüche, **dadurch gekennzeichnet, dass** eine Bildwiederholungsrate größer ist als die Durchtrittszeit eines Mikropartikels (2).

10. Verfahren nach einem der vorhergehenden Ansprüche, **dadurch gekennzeichnet, dass** die Bildwiederholungsrate so eingerichtet ist, dass von jedem Mikropartikel (2) mehrere Aufnahmen beim Durchtritt durch die Aufzeichnungsfläche (5) aufgenommen werden.

11. Verfahren nach einem der vorhergehenden Ansprüche, **dadurch gekennzeichnet, dass** eine Bildabgleichung durchgeführt wird.

12. Verfahren nach einem der vorhergehenden Ansprüche, **dadurch gekennzeichnet, dass** eine akustische Beaufschlagung während der Aufzeichnung vorgenommen wird.

13. Verfahren nach einem der vorhergehenden Ansprüche, **dadurch gekennzeichnet, dass** das Verfahren in einem fluidischen Kanalsystem (9), insbesondere einer Mikrofluidik (10), durchgeführt wird.

14. Messkanal (1), insbesondere zur Durchführung eines der zuvor beanspruchten Verfahren, zur optischen Aufzeichnung von Mikropartikeln (2) in einem Partikelstrom (4), **dadurch gekennzeichnet, dass** die Aufzeichnungsfläche (5) transversal zu einer Längsausdehnung des Messkanals (1) ausgerichtet ist.

15. Messkanal (1) nach Anspruch 14, **dadurch gekennzeichnet, dass** der Messkanal (1) zwischen Detektor (8) und Aufzeichnungsfläche (5) einen Richtungswechsel aufweist.

16. Messkanal (1) nach einem auf einen Messkanal (1) gerichteten Anspruch, **dadurch gekennzeichnet, dass** Mittel (11) zur Fluoreszenzmessung ausgebildet sind.

17. Messkanal (1) nach einem auf einen Messkanal (1) gerichteten Anspruch, **dadurch gekennzeichnet, dass** ein Durchmesser, vorzugsweise ein Durchmesser im Bereich der Aufzeichnungsfläche (5) des Messkanals (1) größer als der mittlere Durchmesser zweier Mikropartikel (2), insbesondere doppelt oder fünfmal so groß, ist.

18. Messkanal (1) nach einem auf einen Messkanal (1) gerichteten Anspruch, **dadurch gekennzeichnet, dass** zwischen Aufzeichnungsfläche (5) und Detektor (8) ein vorzugsweise transparentes Abdichtmedium (12) ausgebildet ist und/oder dass die Aufzeichnungsfläche (5) zwischen zwei vorzugsweise transparenten Abdichtmedien (12) positioniert ist.

19. Messkanal (1) nach einem auf einen Messkanal (1) gerichteten Anspruch, **dadurch gekennzeichnet, dass** der Messkanal (1) einen Zulauf (13) und einen Ablauf (14) hat, wobei der Zulauf (13) und der Ablauf (14) vorzugsweise parallel zueinander ausgebildet sind.

20. Messkanal (1) nach einem auf einen Messkanal (1) gerichteten Anspruch, **dadurch gekennzeichnet, dass** die Aufzeichnungsfläche (5) als Aufzeichnungsebene (7) ausbildbar ist und/oder dass die Aufzeichnungsfläche (5) an wenigstens zwei Positionen des Messkanals (1) ausbildbar ist.

21. Messkanal (1) nach einem auf einen Messkanal (1) gerichteten Anspruch, **dadurch gekennzeichnet, dass** der Messkanal (1) Teil einer Mikrofluidik (10) ist, wobei sich die Mikrofluidik (10) vorzugsweise auf einem scheibenförmigen Probenträger (15) befindet.

22. Scheibenförmiger Probenträger (15), insbesondere mit einer Mikrofluidik (10), **dadurch gekennzeichnet, dass** Mittel zur Ausführung eines Verfahrens nach einem der Ansprüche 1 bis 13 und/oder ein Messkanal (1) nach einem der Ansprüche 14 bis 21 ausgebildet sind.
